**Europäisches Patentamt**

**European Patent Office**

**Office européen des brevets**

(11) Veröffentlichungsnummer: **0 139 121**
**B1**

(19)

(12) **EUROPÄISCHE PATENTSCHRIFT**

(45) Veröffentlichungstag der Patentschrift:
14.01.87

(51) Int. Cl.⁴: **C 01 B 17/52,** C 22 B 1/10,
C 22 B 1/06

(21) Anmeldenummer: **84108993.1**

(22) Anmeldetag: **30.07.84**

(54) **Verfahren zur Herstellung von Schwefeldioxid.**

(30) Priorität: **09.08.83 DE 3328708**

(43) Veröffentlichungstag der Anmeldung:
**02.05.85 Patentblatt 85/18**

(45) Bekanntmachung des Hinweises auf die Patenterteilung:
**14.01.87 Patentblatt 87/3**

(84) Benannte Vertragsstaaten:
**BE DE FR GB IT NL**

(56) Entgegenhaltungen:
**DE-A-2 530 203**
**FR-A-2 057 712**
**FR-A-2 478 672**
**GB-A-746 521**
**US-A-2 785 050**

(73) Patentinhaber: **BAYER AG, Konzernverwaltung RP Patentabteilung, D-5090 Leverkusen 1 Bayerwerk (DE)**

(72) Erfinder: **Lailach, Günter, Dr., Bodelschwinghstrasse 23, D-4150 Krefeld (DE)**
Erfinder: **Gerken, Rudolf, Dr., Ratherstrasse 79, D-4150 Krefeld (DE)**
Erfinder: **Klaeren, Aloys, Dr., Bärenstrasse 12, D-4150 Krefeld (DE)**

## Beschreibung

Die vorliegende Erfindung betrifft ein Verfahren zur Herstellung von Schwefeldioxid durch Rösten von Schwefelkies in Wirbelbettreaktoren, Kühlung und gegebenenfalls Trocknung der Reaktionsgase.

Zur Herstellung von Schwefeldioxid ist die Röstung von Peinkiesen mit Teilchengrößen von 0,1 - 5 mm in Wirbelbettreaktoren bekannt. Bei diesem Prozeß treten keine besonderen Probleme auf. Die Reaktionswärme muß teilweise aus dem Wirbelbett abgeführt werden. Dies kann entweder mittels Kühlrohren unter Dampfgewinnung geschehen oder durch separate Einspeisung von Metallsulfaten oder gebrauchter Schwefelsäure in das Wirbelbett, deren thermische Spaltung zu Schwefeldioxid, Wasser, Sauerstoff und Metalloxiden stark endotherm ist.

Da Feinkiese mit niedrigem Schwermetallverunreinigungspegel kaum noch verfügbar sind, müssen zunehmend Flotationskiese mit Teilchengrößen unter 0,1 mm für die Röstung eingesetzt werden.

Als nachteilig beim Einsatz von Flotationskiesen sind insbesondere zwei Eigenarten zu nennen: Flotationskiese mit einem Wassergehalt zwischen 4 und 8 % neigen zum Kleben an schrägen Flächen, was in Bunkern, Förderorganen und Reaktorbeschickungseinrichtungen zu Verstopfungen und somit Betriebsstillständen führen kann. Durch den Einsatz trockenerer Flotationskiese kann dieses Kleben zwar vermieden werden, es treten dann aber untragbare Staubbelästigungen auf.

Flotationskiese werden außerdem leicht aus den Wirbelbetten ausgeblasen. Die im oberen Teil des Reaktors verbrennenden Teilchen können dann zu Oxidversinterungen im Gasaustritt des Reaktors führen.

Schließlich wird infolge des hohen Feststoffaustrages zu wenig grobteiliges Bettmaterial durch Versinterung der erzeugten Metalloxidteilchen nachgebildet. Dieses ist aber zur Aufrechterhaltung einer gleichmäßigen Rostbeaufschlagung mit Luft und einer guten Quervermischung sowohl des Flotationskieses als auch der gegebenenfalls eingespeisten Sulfate und gebrauchten Säuren dringend erforderlich. Durch Herabsetzen der Luftbeaufschlagung des Reaktors kann dieses Problem teilweise behoben werden. Jedoch werden dadurch sowohl die Kapazität verringert, als auch neue Probleme durch Verschlechterung der Quervermischung erzeugt.

Den geschilderten Nachteilen begegnet man damit, daß die Flotationskiese zusätzlich mit Wasser befeuchtet werden.

Durch diese Maßnahme wird aber die Wirtschaftlichkeit des Prozesses erheblich beeinträchtigt, weil die Verdampfungswärme dieses zusätzlich eingespeisten Wassers entweder für die Prozeß-Dampferzeugung oder für die Sulfat-/Schwefelsäure-Spaltung verloren ist.

Aufgabe der vorliegenden Erfindung ist es daher, ein wirtschaftliches Verfahren bereitzustellen, welches die obengeschilderten Nachteile nicht aufweist.

Es wurde nun gefunden, daß die geschilderten Nachteile eliminiert werden können, wenn man den Schwefelkies in Form einer Suspension bestehend aus Flotationskies und Schwefelsäure in den Reaktor einträgt.

Gegenstand dieser Erfindung ist daher ein Verfahren zur Herstellung von Schwefeldioxid durch Rösten von Schwefelkies in Wirbelbettreaktoren, Kühlung und gegebenenfalls Trocknung der Reaktionsgase, bei dem der Schwefelkies in Form einer Suspension bestehend aus Flotationskies einer Teilchengröße von kleiner als 1 mm und Schwefelsäure in den Wirbelreaktor eingebracht wird.

Das Gewichtsverhältnis von Flotationskies zu Schwefelsäure in dieser Suspension sollte im Bereich von 5 : 1 bis 1 : 5, besonders bevorzugt 3 : 1 bis 1 : 1, liegen.

Die Schwefelsäure im Sinne dieser Erfindung sollte eine $H_2SO_4$-Konzentration von mindestens 20 %, bevorzugt von 40 bis 90 %, aufweisen. Die Schwefelsäure kann Metallsulfate und/oder organische Verbindungen enthalten.

Es kann somit gebrauchte Schwefelsäure eingesetzt werden. Die Zubereitung einer solchen Suspension wurde auf Grund der feinteiligen Beschaffenheit des Flotationskieses und der Aggressivität der Schwefelsäure mit Vorbehalt angesehen. Eine elegante Ausführungsform besteht darin, daß man den Flotationskies mit der Schwefelsäure unmittelbar vor dem Eintrag in den Reaktor mischt. So kann der aus einem Bunker abgezogene Flotationskies, gegebenenfalls zusammen mit vorteilhaften Zumischungen kohlenstoffhaltiger Brennstoffe, Schwefel oder anderen Rohstoffen, in einen kunststoffausgekleideten Schacht abgeworfen wird.

Die Wände dieses Schachtes werden mit gebrauchter Schwefelsäure berieselt, wodurch ein Ankleben des Kieses vermieden wird. Der untere Teil des Schachtes mündet in den Trichter eines Injektors, durch den der Kies zusammen mit der Säure mit Preßluft in den Wirbelreaktor eingeblasen wird.

Der Metallsulfatgehalt der gebrauchten Schwefelsäure ist ohne Bedeutung, solange die Einblasung nicht durch eine zu hohe Viskosität beeinträchtigt wird.

Die Vorteile des erfindungsgemäßen Verfahrens gegenüber denen des Standes der Technik sind darin zu sehen, daß keine prozeßenergie für die Verdampfung von "Kieseintragswasser" verbraucht wird. Außerdem ist der Kühlwasserbedarf bei der Prozeßgaskühlung geringer, weil das "Kieseintragswasser" nicht kondensiert werden muß. Die Kapazität für die thermische Spaltung von Metallsulfaten oder gebrauchter Schwefelsäure ist wesentlich erhöht. Die Kapazität für $SO_2$-Produktion wird überproportional erhöht, weil bei der Spaltung der "Kieseintragesäure" außer $SO_2$ auch $O_2$ gebildet wird, der mit zusätzlichem Schwefelkies reagieren kann.

Die Abröstung des Schwefelkieses erfolgt wesentlich stärker im Wirbelbett als beim Kieseintrag mit Wasser. Das macht sich in einer deutlich vermehrten Bildung von grobem Bettmaterial, gleichmäßigerer Temperaturverteilung im Bett und einem relativen Ansteigen der Temperaturen im Wirbelbett im Vergleich zum Gasraum bemerkbar.

Die Kapazität der Wirbelbettreaktoren kann zusätzlich dadurch erhöht werden, daß der Röstluft Sauerstoff zugemischt wird. Die Kapazität zur thermischen Spaltung von Metallsulfaten oder Schwefelsäure kann durch Verwendung kohlenstoffhaltiger Brennstoffe erhöht werden, die zusammen mit dem Schwefelkies oder separat in die Reaktoren eingespeist werden können.

Die Vorteile der Erfindung sollen durch folgende Beispiele verdeutlicht werden, ohne daß dadurch eine Einschränkung der Erfindung gesehen werden soll.

## Beispiel 1 (vergleichsbeispiel)

In einen Wirbelbettreektor mit 12 $m^2$ Rostfläche wurden 7,5 t/h Flotationskies mit 5 % Feuchte eingespeist. Dabei wurde der Kies mit einem regelbaren Abzugsband aus einem Bunker abgezogen und in einen konisch sich nach unten verjüngenden Schacht abgeworfen. Aus dem Schacht fiel der Kies in den Trichter eines Injektors und wurde mit 500 $m^3_n$/h Luft in den Wirbelbettreaktor eingeblasen. Um Störungen durch anklebenden und unregelmäßig aus dem Schacht abfallenden Kies zu vermeiden, mußten 800 l/h Wasser in den Schacht eingedüst werden. Der Wirbelbettreaktor wurde mit 18 000 $m^3_n$/h Luft beaufschlagt; seitlich wurden in das Wirbelbett 0,65 t/h Metallsulfate in 2,6 t/h 65 %iger Schwefelsäure eingespeist.

Das stark stoßende Wirbelbett hatte 0,3 m über dem Rost Temperaturen zwischen 800 und 850°C. Am Reaktoraustritt wurden 1050°C gemessen. Das Reaktionsgas enthielt 20 % $SO_2$ und 1 % $O_2$ (Vol. % bez. auf trockenes Gas).

Bei einem Druckverlust von 0,15 bar in Rost und Wirbelbett wurden durchschnittlich 20 kg/h Bettmaterial aus dem Reaktor ausgeschleust. 6 t/h feinteiligen Abbrands wurden aus dem Abhitzekessel und dem Gasreinigungssystem ausgetragen.
Die $SO_2$-Produktion betrug 10,7 t/h.

## Beispiel 2

Analog Beispiel 1 wurden in den Wirbelbettreaktor 7,5 t/h Flotationskies mit 5 % Feuchte eingetragen. Statt die Wände des Schachtes mit 800 l/h $H_2O$ zu bedüsen, wurden diese mit 2 t/h 90 %iger, mit organischen Verbindungen verunreinigter Schwefelsäure berieselt. Der Wirbelbettreaktor wurde mit 18 000 $m^3_n$/h Luft beaufschlagt; seitlich in das Bett wurden 1 t/h Flüssigschwefel und die gleiche Menge Metallsufat-Schwefelsäure-Suspension wie bei Beispiel 1 eingespeist.

Das Reaktionsgas enthielt 23 Vol.% $SO_2$ und 1 Vol.% $O_2$. Die $SO_2$-Produktion betrug 12,4 t/h. Die Temperaturmessungen über dem Rost ergaben Werte zwischen 900 und 920°C; am Reaktoraustritt lag die Temperatur bei 950°C.

Bei einem Druckverlust von 0,17 bar wurden durchschnittlich 450 kg/h grober Abbrand aus dem Wirbelbettreaktor und 5,5 t/h feiner Abbrand aus dem Abhitzekessel und dem Gasreinigungssystem ausgetragen.

## Beispiel 3

Gegenüber Beispiel 2 wurden folgende Änderungen vorgenommen:
Die 90 %ige Schwefelsäure beim Kieseintrag wurde durch eine Metallsulfat-Schwefelsäure-Suspension ersetzt.

Insgesamt wurden 7,3 t/h dieser Suspension eingespeist, wobei die am Kieseintrag aufgegebene Menge zwischen 1,5 und 3 t/h variiert wurde. Außer einem Absinken der Reaktoraustrittstemperatur von 950 auf 930°C wurden keine merklichen Änderungen in den Betriebsbedingungen gegenüber Beispiel 2 beobachtet.

## Patentansprüche

1. Verfahren zur Herstellung von Schwefeldioxid durch Rösten von Schwefelkies in Wirbelbettreaktoren, Kühlung und gegebenenfalls Trocknung der Reaktionsgase, dadurch gekennzeichnet, daß der Schwefelkies in Form einer Suspension bestehend aus Flotationskies einer Teilchengröße von kleiner als 1 mm und Schwefelsäure in den Wirbelreaktor eingebracht wird.

2. Verfahren gemäß Anspruch i, dadurch gekennzeichnet, daß das Gewichtsverhältnis von Flotationskies zu Schwefelsäure im Bereich von 5 : 1 bis 1 : 5, besonders bevorzugt 3 : 1 bis 1 : 1, liegt.

3. Verfahren gemäß einem der Ansprüche 1 oder 2, dadurch gekennzeichnet, daß die Schwefelsäure eine $H_2SO_4$-Konzentration von mindestens 20 % aufweist.

4. Verfahren gemäß einem der Arsprüche 1 bis 3, dadurch gekennzeichnet, daß die Schwefelsäure eine $H_2SO_4$-Konzentration von 40 bis 90 % aufweist.

5. Verfahren gemäß einem der Ansprüche 1 bis 4, dadurch gekennzeichnet, daß die Schwefelsäure Metallsulfate enthält.

6. Verfahren gemäß einem der Ansprüche 1 bis 5, dadurch gekennzeichnet, daß die Schwefelsäure organische Verbindungen enthält.

7. Verfahren gemäß einem der Ansprüche 1 bis 6, dadurch gekennzeichnet, daß dem Schwefelkies kohlenstoffhaltige Brennstoffe zugemischt werden.

8. Verfahren gemäß einem der Ansprüche 1 bis 7, dadurch gekennzeichnet, daß das Einbringen der Schwefelsäure-Schwefelkies-Suspension in die Wirbelbettreaktoren durch Einblasen mit Luft erfolgt.

## Claims

1. Process for the Production of sulphur dioxide by roasting iron pyrites in fluidised bed reactors, cooling and optionally drying the reaction gases, characterised in that the iron pyrites is introduced into the fluidised bed reactor in the form of a suspension consisting of flotation pyrites of a particle size of less than 1 mm and sulphuric acid.

2. Process according to Claim 1, characterised in that the weight ratio of flotation pyrites to sulphuric acid is in the range of 5 : 1 to 1 : 5, particularly preferably 3 : 1 to 1 : 1.

3. Process according to one of Claims 1 or 2, characterised in that the sulphuric acid has an $H_2SO_C$ concentration of at least 20%.

4. Process according to one of Claims 1 to 3, characterised in that the sulphuric acid has an $H_2SO_4$ concentration of 40 to 90%.

5. Process according to one of Claims 1 to 4, characterised in that the sulphuric acid contains metal sulphates.

6. Process according to one of Claims 1 to 5, characterised in that the sulphuric acid contains organic compounds.

7. Process according to one of Claims 1 to 6, characterised in that carbon-containing fuels are admixed to the iron pyrites.

8. Process according to one of Claims 1 to 7, characterised in that the sulphuric acid/iron pyrites suspension is introduced into the fluidised bed reactors by blowing-in with air.

## Revendications

1. Procédé de fabrication d'anhydride sulfureux par grillage de pyrite dans des réacteurs à lit fluidisé, refroidissement et éventuellement séchage des gaz de réaction, caractérisé par le fait que la pyrite est introduite dans le réacteur à lit fluidisé sous la forme d'une suspension comprenant un gravier de flottation d'une granulométrie inférieure à 1 mm, ainsi que de l'acide sulfurique.

2. Procédé selon la revendication 1, caractérisé par le fait que le rapport pondéral entre le gravier de flottation et l'acide sulfurique se situe dans la plage de 5 : 1 à 1 : 5, et notamment de préférence de 3 : 1 à 1 : 1.

3. Procédé selon l'une des revendications 1 ou 2, caractérisé par le fait que l'acide sulfurique présente une concentration en $H_2SO_Y$ d'au moins 20 %.

4. Procédé selon l'une des revendications 1 à 3, caractérisé par le fait que l'acide sulfurique présente une concentration en $H_2SO_4$ de 40 à 90 %.

5. Procédé selon l'une des revendications 1 à 4, caractérisé par le fait que l'acide sulfurique renferme des sulfates métalliques.

6. Procédé selon l'une des revendications 1 à 5, caractérisé par le fait que l'acide sulfurique renferme des composés organiques.

7. Procédé selon l'une des revendications 1 à 6, caractérisé par le fait que des combustibles renfermant du carbone sont ajoutés à la pyrite.

8. Procédé selon l'une des revendications 1 à 7, caractérisé par le fait que l'introduction, dans les réacteurs à lit fluidisé, de la suspension d'acide sulfurique et de pyrite a lieu par insufflation à l'air.